# EUROPEAN PATENT SPECIFICATION

(11) **EP 0 276 143 B1**
(45) Date of publication and mention of the grant of the patent: **17.05.1995**
(21) Application number: 88300461.6
(22) Date of filing: 20.01.1988
(51) Int. Cl.: G11B 27/02, G11B 27/34, G11B 31/00

(54) **Device for Specifying and Calculating a Reproducing Time of an Optical Disk Player**
Vorrichtung zur Eingabe und Berechnung einer Abspieldauer von einer optische Platte in einem Wiedergabegerät
Appareil pour spécifier et calculer la durée de reproduction d'un appareil de lecture de disque optique

(30) Priority: 20.01.1987 JP 10604/87
(43) Date of publication of application: 27.07.1988
(73) Proprietor: MATSUSHITA ELECTRIC INDUSTRIAL CO., LTD., Kadoma-shi, Osaka-fu, 571 (JP)
(72) Inventor: Tomoda, Hurhisa, Netagawa-shi, Osaka-fu 572 (JP); Shimada, Yasuomi, Katano-shi, Osaka-fu 576 (JP)
(74) Representative: Crawford, Andrew Birkby

(56) References cited:
- EP-A- 0 051 259
- DE-A- 2 837 111
- GB-A- 2 030 755
- PATENT ABSTRACTS OF JAPAN vol. 10, no. 369 (P-525)(2426) 10 December 1986 & JP-A-61 162876

## Description

Optical disk reproducing apparatus such as compact disk players have come into wide use in recent years.

On the optical disk of the foregoing are generally recorded information, such as music, together with index information such as playing time in connection with the foregoing recorded information.

In an optical disk reproducing apparatus, it has been proposed to utilise the index information, such as the foregoing playing time, to edit recorded information, such as music, on to a magnetic tape by combining arbitrary program reproduction and a tape recorder.

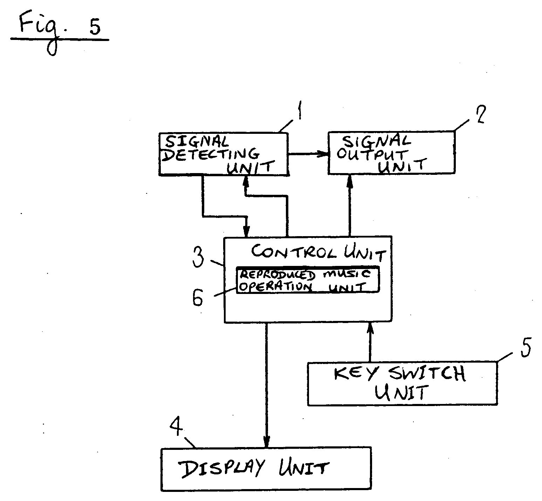

Conventionally, an optical disk reproducing apparatus of this type has a construction as shown in Fig. 5 through Fig. 7.

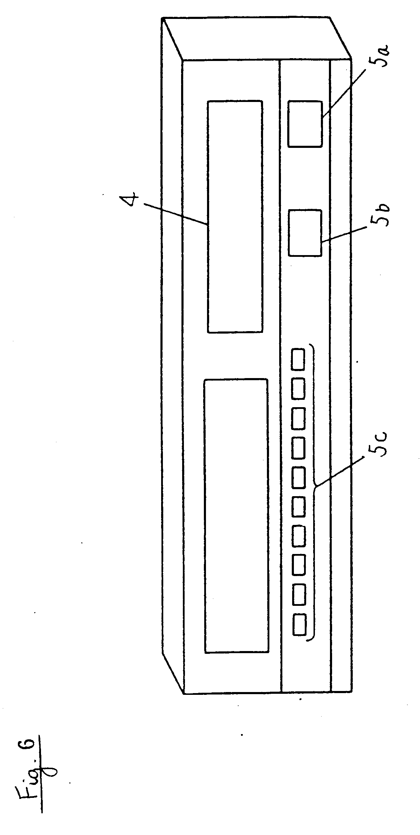

That is to say, a signal detecting unit 1 comprising a light pickup or the like reads out the recorded information, e.g. music information, or the index information, e.g. playing time information, recorded on an optical disk (hereafter simply called a disk). A signal output unit 2 processes the recorded information read by the signal detecting unit 1 and converts it into an audio signal which is output. A control unit 3 controls the signal detecting unit 1 and the signal output unit 2 and drives a display unit 4 which displays the index information, such as the playing time, read by the signal detecting unit 1. A key switch unit 5 comprises a play key 5a (fig. 6) which commands the control unit 3 to start playing, a reproduction time specifying key 5b which inputs arbitrary reproduction time into the control unit 3, and arbitrary time input keys 5c. The control unit 3 includes a reproduced music operation unit 6 which calculates the number of pieces of music which can be reproduced in the specified reproduction time (inputed by using the reproduction time specifying key 5b and the arbitrary time input key 5c), calculates and stores the playing music in a disk.

Such apparatus is known from PATENT ABSTRACTS OF JAPAN vol. 10, no. 369 (P-525)(2426) 10 Dec. 1986 (Fujitsu Ltd.).

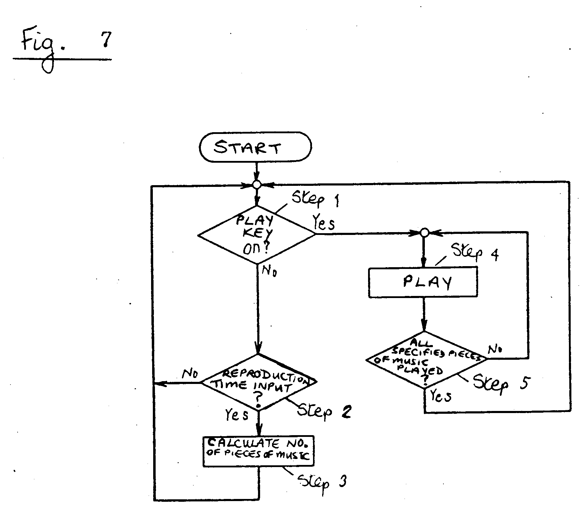

The operation of the known apparatus will now be explained with reference to fig. 7 which is a flowchart.

Whether or not the play key 5a is depressed is determined by the step 1, and if not depressed, the apparatus moves to step 2, and if depressed, the apparatus moves to step 4. In step 2, whether the reproduction time was inputted by the reproduction time specifying key 5b and the arbitrary time input key 5c is determined, and if specified by these keys, the apparatus moves to step 3, and if not specified by these keys, the step then returns to step 1. In step 3, the number of pieces of music specified in a disk which can be reproduced within the specified reproduction time is calculated and the music number of the specified music is stored. In step 4, a piece of the music corresponding to the music number stored in the step 3 is played and the step moves to the step 5. In step 5, whether all of the specified stored pieces of music have been played is determined, and if not played, the step returns to the step 4, and if all the pieces of music have been played, the playing is ended, and the step returns to the step 1. If the reproduction time is not specified when the step moved to the step 4, all the pieces of music on a disk are played and the playing is ended.

However, in a conventional construction as described above, when recording on a magnetic tape, the tape length had to be halved by the user to obtain the time of one side of the tape before manual input of the reproduction time, and further, in order to input such reproduction time, it was necessary to repeat time consuming operations for many times wherein the number key which corresponds to such time is selected from the key switches and depressed.

The present invention overcomes conventional problems such as those above and provides an optical disk reproducing apparatus, wherein when a tape length is specified, it is possible to perform inside the apparatus the calculation to halve the tape length and to input a certain specified tape length using one key switch.

According to the present invention there is provided a device for specifying and calculating a reproduction time of an optical disk player such that the reproduction time is specified and calculated to coincide with a recording length a magnetic tape, the optical disk player reproducing information stored on an optical disk, the information being stored in the form of a plurality of recorded segments, at least one of the plurality of recorded segments reproduced by the optical disc player being recorded on said magnetic tape by a tape recorder, said device comprising:
a recording length specifying means for specifying the total recording length of the magnetic tape;
a display means, coupled to said recording length specifying means, for displaying said recording length specified by said recording length specifying means;
a segment determining means, coupled to said optical disk player, for determining and selecting, based on the index information, a number of the plurality of recorded segments which can be reproduced within the available recording time and for storing an identification of said number of plurality of recorded segments thus selected, characterised in that the device further comprises:
a reproduction time calculating means, coupled to said recording length specifying means and said segment determining means, calculatina the recording length of one side of the magnetic tape by multiplying the recording length specified by the recording length specifying means by one-half.

In particular, an embodiment of the present invention comprises an arbitrary time input means for inputting an arbitrary time into the control unit.

The operation of the above embodiment of the present invention is as follows:

That is to say, an input time is specified to the control unit by the tape length specifying means, the time of one side of a tape is obtained by the specified reproduction time division unit by halving the input time specified, the number of pieces of music on a disk that can be reproduced within the time of one side of the tape is calculated by the reproduced music operation unit, and the music numbers of the foregoing number of pieces of music on the disk are stored so that it is possible to input the reproduction time easily.

An advantage provided by embodiments of the present invention is that it is no longer necessary for a user to calculate the time of one side of a cassette tape used for recording, thereby tape length entry is facilitated.

Embodiments of the present invention will hereafter be described by referring to the drawings, in which Fig. 1 is a block diagram showing an embodiment of an optical disk reproducing apparatus according to the present invention, Fig. 2 is a block diagram showing parts thereof, Fig. 3 is a perspective diagram of the appearance thereof, Fig. 4 is a flowchart of tape length specification by the apparatus, Fig. 5 is a block diagram of a conventional embodiment, Fig. 6 is a perspective diagram of the appearance thereof, and Fig. 7 is a flowchart thereof.

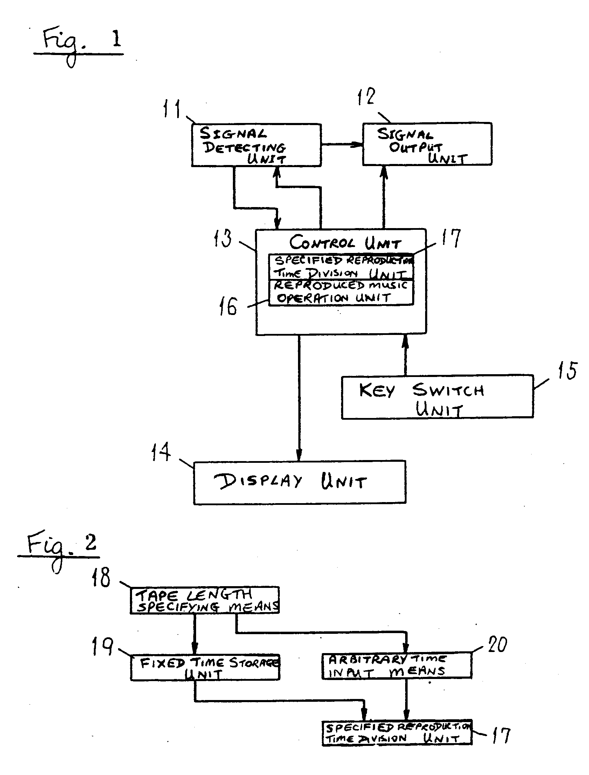

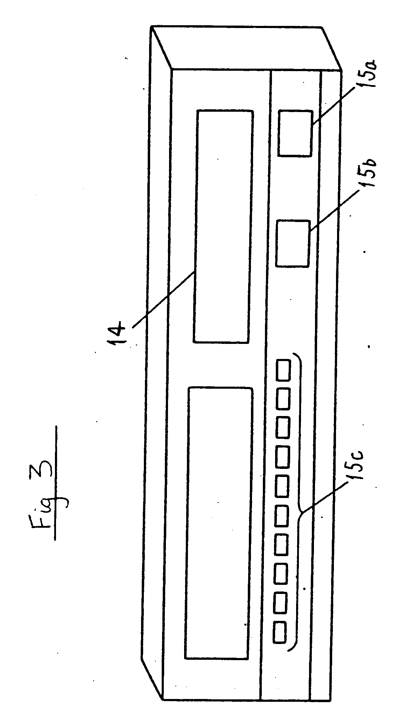

In Fig. 1 through Fig. 4, the signal detecting unit 11 and the signal output unit 12 have the same functions as those of the conventional embodiments. A control unit 13 controls the signal detecting unit 11 and the signal output unit 12. A display unit 14 is provided for displaying the playing time and the specified reproduction time and so forth. A key switch unit 15 comprises a play key 15a which gives the control unit 13 a command to start playing, a tape length specifying key 15b which specifies to the control unit the length of the magnetic recording tape to be used for recording the reproduction signal of the disk, and an arbitrary time input key 15c for inputting arbitrary time when specifying the tape length. The control unit 13 includes a specified reproduction time division unit 17 wherein the time (length) of one side of the tape is obtained by halving the reproduction time specified by the tape length specifying means. The tape length specifying means specifies the tape length by means of the fixed time storage unit 19, which stores data indicative of prearranged fixed times of 90 minutes, 60 minutes, and 46 minutes, and the artbitrary time input means 20 for inputting an arbitrary time into the control unit 13.

The control unit 13 also includes the reproduced music operation unit 16 which calculates the number of pieces of music in a disk that can be reproduced within the time of one side of the tape (obtained by the specified reproduction time division unit 17) and stores the music numbers of the foregoing number of pieces of music in the disk.

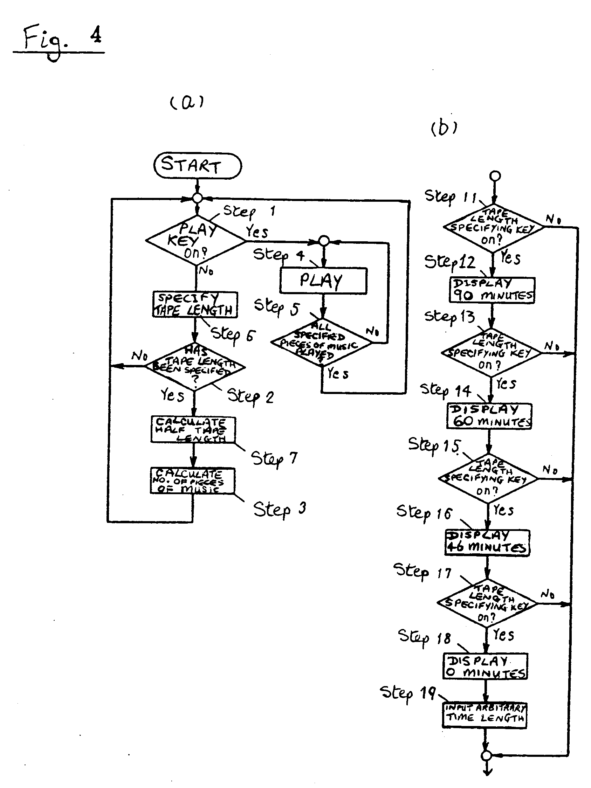

With respect to the embodiments of the present invention constituted as above, operations thereof will be described using the flowchart shown in Fig. 4.

In Fig. 4 (a), step 1, step 4, and step 5, represent the same operations as those of the conventional embodiments and the descriptions thereof are therefore omitted. In step 6, the tape length specifying key 15b and the arbitrary time input key 15c are used to specify the length of the magnetic recording tape and the step moves to the step 2. Fig. 4 (b), shows in detail the steps making up step 6. Whether the tape length specifying key 15b was depressed is determined in the step 11, and if depressed, the step moves to the step 12, and if not depressed, then the step moves to the step 1. In step 12, the display unit 14 displays a time information of 90 minutes which is stored in the fixed time storage unit 19 to establish this 90 minutes as the specified reproduction time and the step moves to the step 13. In step 13 through step 16, the same operations as those of the steps 11 and 12 are repeated to change the fixed values sequentially from 60 minutes to 46 minutes. In step 17, whether the tape length specifying key was depressed is determined again, and if depressed, the step moves to the step 18, and if not depressed, the step moves to the step 2. In step 18, in order to indicate that the mode is the arbitrary time specifying mode, 0 minute is displayed and the step moves to the step 19. In step 19, the arbitrary time input key 15c specifies the tape length and the step moves to the step 2. In step 2, whether the tape length was specified in the step 6 was determined, and if specified, the step moves to the step 7, and if not specified, then the step returns to the step 1. In step 7, a half the time specified in the step 6 is obtained by the specified reproduction time division unit 17, the results of the calculation accomplished by the division unit 17 being displayed as the time of one side of the tape if necessary, and the step moves to the step 3. In step 3, the number of pieces of music on a disk which can be reproduced within this time of one side of the tape is calculated, the music numbers of such pieces of music are stored and the step returns to the step 1.

As stated above, according to this embodiment of the present invention, it is possible to specify with one key switch a tape length of 90 minutes, 60 minutes, or 46 minutes (which occupy the most part of a compact cassette tape) and the halving of the specfied time takes place in the apparatus, thereby elimintating the necessity for the operator to calculate the time of one side of the tape.

In the above embodiment, since it is assumed that the tape length specifying means operates, the embodiment which has both the fixed time storage unit and the arbitrary time input means and automatically edits the music that can be reproduced within a specified time is described. However, other embodiments may be equipped either with the fixed time storage unit or with the arbitrary time input means or otherwise equipped with a reproduced music operation unit which can specify the pieces of music to be reproduced in any sequences and can edit and operate such specified pieces of music.

## Claims

1. A device for specifying and calculating a reproduction time of an optical disk player such that the reproduction time is specified and calculated to coincide with a recording length of a magnetic tape, the optical disk player reproducing information stored on an optical disk, the information being stored in the form of a plurality of recorded segments, at least one of the plurality of recorded segments reproduced by the optical disc player being recorded on said magnetic tape by a tape recorder, said device comprising:
a recording length specifying means (15, 15b) for specifying the total recording length of the magnetic tape;
a display means (14), coupled to said recording length specifying means, for displaying said recording length specified by said recording length specifying means;
a segment determining means, coupled to said optical disk player, for determining and selecting, based on the index information, a number of the plurality of recorded segments which can be reproduced within the available recording time and for storing an identification of said number of plurality of recorded segments thus selected, characterised in that the device further comprises:
a reproduction time calculating means (17), coupled to said recording length specifying means and said segment determining means, calculating the recording length of one side of the magnetic tape by multiplying the recording length specified by the recording length specifying means by one-half.

2. A device according to claim 1, wherein the recording length specifying means (15) includes an arbitrary time input means (15c) into which data indicative of a time corresponding to the total recording length of any two-sided magnetic tape may be input by the user.

## Patentansprüche

1. Gerät zum Angeben und Berechnen einer Wiedergabezeit eines Optikplattenspielers in solcher Weise, daß die Wiedergabezeit angegeben und berechnet, daß sie einer Aufzeichnungsdauer der an einer Optikplatte gespeicherten Optikplattenplayer-Wiedergabeinformation an einem Magnetband entspricht, wobei die Information in Form einer Vielzahl von aufgezeichneten Segmenten gespeichert ist, von denen mindestens eines aus der Vielzahl von aufgezeichneten Segmenten durch den Optikplatten-Player durch einen Magnetband-Recorder auf dem Magnetband aufgezeichnet wurde, und das Gerät umfaßt:
ein Aufzeichnungsdauer-Angebemittel (15, 15b) zum Angeben der Gesamtaufzeichnungsdauer des Magnetbandes;
ein mit dem Aufzeichnungsdauer-Angebemittel gekoppeltes Anzeigemittel (14) zum Anzeigen der durch das Aufzeichnungsdauer-Angebemittel angegebenen Aufzeichnungsdauer; ein mit dem Optikplattenplayer gekoppeltes Segmentbestimmungsmittel, um aufgrund der Indexinformation eine Anzahl aus der Vielzahl aufgezeichneter Segmente zu bestimmen und auszuwählen, die innerhalb der verfügbaren Aufzeichnungszeit wiedergegeben werden können, und eine Identifizierung der Anzahl der Vielzahl von so ausgewählten aufgezeichneten Segmenten zu speichern, **dadurch gekennzeichnet**, daß das Gerät weiter umfaßt:
ein Abspielzeit-Errechnungsmittel (17), das mit dem Aufzeichnungsdauer-Eingebemittel und dem Segment-Bestimmungsmittel gekoppelt ist und die Aufzeichnungsdauer an einer Seite des Magnetbandes errechnet durch Multiplizieren der durch das Aufzeichnungsdauer-Angebemittel angegebenen Aufzeichnungsdauer mit einhalb.

2. Gerät nach Anspruch 1, bei dem das Aufzeichnungsdauer-Angebemittel (15) ein Schätzzeit-Eingabemittel (15c) enthält, in welches durch den Benutzer Daten eingegeben werden können, die für eine Zeitdauer bezeichnend sind, welche der Aufzeichnungsdauer des jeweiligen zweiseitigen Magnetbandes entspricht.

## Revendications

1. Dispositif destiné à spécifier et calculer un temps de reproduction d'un lecteur de disque optique de façon que le temps de reproduction soit spécifié et calculé pour coïncider avec une longueur d'enregistrement d'une bande magnétique, le lecteur de disque optique reproduisant des informations mémorisées sur un disque optique, les informations étant mémorisées sous la forme d'une pluralité de segments enregistrés, au moins un segment de la pluralité de segments enregistrés reproduits par le lecteur de disque optique étant enregistré sur ladite bande magnétique par un dispositif d'enregistrement sur bande, ledit dispositif comprenant :
un moyen (15, 15b) de spécification de longueur d'enregistrement, qui sert à spécifier la longueur d'enregistrement totale de la bande magnétique ;
un moyen d'affichage (14), couplé audit moyen de spécification de longueur d'enregistrement, qui sert à afficher ladite longueur d'enregistrement spécifiée par ledit moyen de spécification de longueur d'enregistrement; un moyen de détermination de segments, couplé audit lecteur de disque optique, qui sert à déterminer et à sélectionner, sur la base des informations d'index, un nombre de segments de la pluralité de segments enregistrés qui peut être reproduit dans les limites du temps d'enregistrement disponible et qui sert à mémoriser une identification dudit nombre de segments de la pluralité de segments enregistrés ainsi sélectionné,
caractérisé en ce qu'il comprend en outre :
un moyen (17) de calcul de temps de reproduction, couplé audit moyen de spécification de longueur d'enregistrement et audit moyen de détermination de segments, qui calcule la longueur d'enregistrement d'un côté de la bande magnétique en multipliant par 1/2 la longueur d'enregistrement spécifiée par le moyen de spécification de longueur d'enregistrement.

2. Dispositif selon la revendication 1, où le moyen (15) de spécification de longueur d'enregistrement comporte un moyen (15c) d'entrée de temps arbitraire dans lequel une donnée indicative d'un temps correspondant à la longueur d'enregistrement totale d'une quelconque bande magnétique à deux côtés peut être introduite par l'utilisateur.
